# EUROPÄISCHE PATENTANMELDUNG

(11) **EP 1 263 221 A2**
(43) Veröffentlichungstag der Anmeldung: **04.12.2002**
(21) Anmeldenummer: 02011839.4
(22) Anmeldetag: 28.05.2002
(51) Int. Cl.: H04N 5/45

(54) **Verfahren und Vorrichtung zur Darstellung von wenigstens zwei Bildern in einem Gesamtbild**

(30) Priorität: 01.06.2001 DE 10126790
(71) Anmelder: Micronas Munich GmbH, 81541 München (DE)
(72) Erfinder: Rieder, Peter, 81737 München (DE); Hahn, Marko, 81373 München (DE); Schu, Markus, 85435 Erding (DE); Tuschen, Christian, 80687 München (DE)
(74) Vertreter: Patentanwälte Westphal, Mussgnug & Partner

(57) **Zusammenfassung**

Die vorliegende Erfindung betrifft ein Verfahren und eine Vorrichtung von wenigstens zwei sich überlappenden Bildern (M, S) in einem Gesamtbild (G), wobei aus einem ersten Videosignal (VM), das Bildinformationen des in einem ersten aktiven Bereich (A1) dargestellten ersten Bildes (M) enthält, und aus einem zweiten Videosignals (VS), das Bildinformationen des in einem zweiten aktiven Bereich (A2) dargestellten zweiten Bildes (S) enthält, ein drittes Videosignal (VMS) gebildet wird, das Bildinformationen eines in einem Überlappungsbereich (A12) aus dem ersten und zweiten aktiven Bereich (A1, A2) dargestellten Bildes enthält.

## Beschreibung

Die vorliegende Erfindung betrifft ein Verfahren zur Darstellung eines Bildes eines ersten Videokanals und eines Bildes eines zweiten Videokanals in einem Gesamtbild und eine Vorrichtung zur Durchführung eines solchen Verfahrens.

Zur Darstellung eines Bildes eines ersten Videokanals und eines Bildes eines zweiten Videokanals in einem Gesamtbild ist es bekannt, einem Multiplexer ein erstes Videosignal und ein zweites Videosignal zuzuführen, wobei das erste Videosignal Bildinformationen eines in einem ersten aktiven Bereich des Gesamtbildes darzustellenden ersten Bildes und das zweite Videosignal Bildinformationen eines in einem zweiten aktiven Bereich des Gesamtbildes darzustellenden zweiten Bildes enthält. Der Multiplexer bildet bei dem bekannten Verfahren aus dem ersten und zweiten Videosignal ein Ausgangsvideosignal, das zur Darstellung des Gesamtbildes mittels einer herkömmlichen Anzeigevorrichtung, beispielsweise einem Monitor, geeignet ist.

Das Gesamtbild ist zeilenweise aufgebaut, das heißt die Bildinformationen nebeneinander liegender Bildpunkte in dem Gesamtbild liegen in dem Ausgangssignal zeitlich aufeinander folgend vor. Entsprechend enthalten das erste und zweite Videosignal Bildinformationen nebeneinander liegender Bildpunkte zeitlich aufeinander folgend. In dem Multiplexer wird für jeden Bildpunkt, dessen Bildinformation in dem Ausgangssignal enthalten ist, eine Entscheidung getroffen, ob der Bildpunkt in dem ersten oder zweiten aktiven Bereich des Gesamtbildes oder außerhalb dieser aktiven Bereiche liegt. Liegt der Bildpunkt innerhalb des ersten aktiven Bereiches, so gibt der Multiplexer das erste Videosignal, bzw. die Bildinformation dieses Videosignals an den Ausgang zur Bildung des Ausgangssignals weiter. Liegt der Bildpunkt innerhalb des zweiten aktiven Bereiches, so gibt der Multiplexer das zweite Videosignal an den Ausgang weiter, und liegt der Bildpunkt außerhalb des ersten und zweiten aktiven Bereiches, so gibt der Multiplexer ein Videosignal für ein Hintergrundbild an den Ausgang weiter. Die aufeinander folgenden Werte des Ausgangssignal, das zeilenweise die Informationen des Gesamtbildes enthält, werden somit abhängig von der Position eines Bildpunktes in dem Gesamtbild dem ersten oder zweiten Videosignal oder dem Videosignal für das Hintergrundbild entnommen.

Zur Entscheidung, ob ein Bildpunkt in dem ersten oder zweiten aktiven Bereich oder außerhalb davon liegt, werden dem Multiplexer Steuersignale zugeführt, die Informationen bezüglich der Position und der Abmessungen der aktiven Bereiche enthalten.

Überlappen oder überdecken sich der erste und zweite aktive Bereich, so wird für die Entscheidung, ob die Bildinformation für einen Bildpunkt des überlappenden Bereiches dem ersten oder zweiten Videosignal entnommen wird, ein Prioritätssignal herangezogen, das bestimmt, welches der Videosignale zur Darstellung der Bildpunkte des Überlappungsbereiches verwendet wird, welches der beiden Bilder also im Vordergrund steht und das andere der beiden Bilder damit teilweise oder vollständig überdeckt. Das Prioritätssignal kann bei zwei darzustellenden Bildern zwei unterschiedliche Werte annehmen, wobei bei einem Wechsel des Prioritätssignals das vorher im Hintergrund dargestellte Bild in den Vordergrund rückt.

Das bekannte Verfahren ermöglicht nur die Darstellung der Bildinformationen eines der Videosignale in dem Überlappungsbereich.

Ziel der vorliegenden Erfindung ist es, ein Verfahren zur Darstellung eines ersten und eines zweiten Bildes in einem Gesamtbild zur Verfügung zu stellen, das eine Darstellung von Bildinformationen des ersten und des zweiten Videosignals in dem Überlappungsbereich ermöglicht und bei dem insbesondere ein Überblenden von dem ersten zu dem zweiten Bild in dem Überlappungsbereich bei einem Wechsel des im Vordergrund darzustellenden Bildes möglich ist.

Dieses Aufgabe wird durch ein Verfahren gemäß des Anspruchs 1 gelöst. Eine Vorrichtung zur Durchführung des erfindungsgemäßen Verfahrens ist Gegenstand des Anspruchs 8.

Vorteilhafte Ausgestaltungen der Erfindung sind Gegenstand der Unteransprüche.

Das erfindungsgemäße Verfahren zur Darstellung eines ersten und eines zweiten Bildes, die sich wenigstens teilweise überlappen, in einem Gesamtbild sieht vor, ein erstes Videosignal zur Darstellung des ersten Bildes in einem ersten aktiven Bereich des Gesamtbildes und ein zweites Videosignal zur Darstellung des zweiten Bildes in einem zweiten aktiven Bereich des Gesamtbildes zur Verfügung zu stellen. Erfindungsgemäß ist vorgesehen, aus dem ersten Videosignal und dem zweiten Videosignal ein drittes Videosignal zu erzeugen und aus dem ersten, zweiten und dritten Videosignal ein Ausgangssignal zur Darstellung des Gesamtbildes zu bilden, wobei zur Darstellung von Bildpunkten des Überlappungsbereiches ausschließlich Bildinformationen des dritten Videosignals verwendet werden.

Die Informationen bezüglich der Position und der Abmessungen des ersten aktiven Bereiches sind vorzugsweise in einem ersten Steuersignal enthalten, die Informationen bezüglich der Position und der Abmessungen des zweiten aktiven Bereiches sind vorzugsweise in einem zweiten Steuersignal enthalten und die Informationen bezüglich der Position und der Abmessungen des Überlappungsbereiches sind vorzugsweise in einem dritten Steuersignal enthalten, wobei diese Streuersignale bei der Entscheidung, ob eine Bildinformation des ersten, zweiten oder dritten Videosignals auf das Ausgangssignal abgebildet wird, anhand der Steuersignale getroffen wird. Das dritte Videosignal besitzt dabei oberste Priorität, das heißt Bildinformationen für Bildpunkte des Überlappungsbereiches werden stets dem dritten Videosignal entnommen.

Zur Erzeugung des dritten Videosignals aus dem ersten und zweiten Bildsignal sind verschiedene Möglichkeiten vorgesehen, die unabhängig voneinander oder auch zeitlich aufeinanderfolgend angewendet werden können.

Ein erstes Ausführungsbeispiel sieht vor, das erste und zweite Videosignal miteinander zu addieren. Im Überlappungsbereich resultieren daraus Bildpunkte deren Bildinformationen aus einer Überlagerung der Bildinformationen des ersten Bildes und des zweiten Bildes resultieren.

Eine zweite Ausführungsform sieht vor, vor der Addition des ersten und zweiten Videosignals, das erste Videosignal mit einem ersten Gewichtungsfaktor und das zweite Videosignal mit einem zweiten Gewichtungsfaktor zu gewichten. Der Extremfall, bei dem einer der Gewichtungsfaktoren Eins und der andere Gewichtungsfaktor Null ist, entspricht dabei dem Fall, bei dem die Bildinformationen für Bildpunkte des Überlappungsbereiches nur einem Videosignal, nämlich dem Videosignal, das mit dem Gewichtungsfaktor Eins gewichtet ist, entnommen sind. Dies entspricht der Darstellung des Bildes im Vordergrund, dessen Videosignal mit dem Gewichtungsfaktor Eins gewichtet ist.

Die Gewichtungsfaktoren können einer zeitlichen Änderung unterliegen und/oder sie können einer räumlichen Änderung, das heißt einer von der Position des darzustellenden Bildpunktes in dem Überlappungsbereich abhängigen Änderung, unterliegen. Eine zeitliche oder räumliche Änderung der Gewichtungsfaktoren ermöglicht ein zeitliches oder räumliches Überblenden von der Darstellung des ersten Bildes zu dem zweiten Bild in dem Überlappungsbereich.

Bei der zeitlichen Änderung ist der Gewichtungsfaktor des einen Videosignals zunächst Eins und wechselt über der Zeit zu Null, während der Gewichtungsfaktor des anderen Videosignals von Null auf Eins wechselt. Die Zeitdauer, innerhalb der der Übergang stattfindet ist so gewählt, dass sie größer ist als die Zeitdauer, innerhalb der die Bildinformationen für ein darzustellendes Bild bzw. Halbbild übertragen werden, wobei die Zeitdauer vorzugsweise wenigstens einige Sekunden beträgt, so dass ein für das menschliche Auge langsamer kontinuierlicher Übergang von der Darstellung der Bildinformationen des einen Videosignals zu der Darstellung der Bildinformation des anderen Videosignals in dem Überlappungsbereich entsteht.

Bei einer Ausführungsform der Erfindung ist vorgesehen, den Überlappungsbereich in ein Raster, beispielsweise ein schachbrettartiges Raster zu unterteilen und in den einzelnen Feldern dieses Rasters jeweils abwechselnd die Bildinformationen des ersten und des zweiten Videosignals darzustellen. Dies wird durch Gewichtungsfaktoren erreicht, die abhängig von der Position des darzustellenden Bildpunktes in dem Überlappungsbereich den Wert Eins oder Null annehmen. Die Gewichtungsfaktoren können zudem einer zeitlichen Änderung unterliegen, wodurch von der Darstellung eines Bildes in dem Überlappungsbereich über die Darstellung des "Schachbrettmusters" auf die Darstellung der Bildinformation des anderen Bildes in dem Überlappungsbereich übergeblendet werden kann.

Es sind beliebige weitere zeitliche oder von der Position der Bildpunkte abhängige Änderungen der Gewichtungsfaktoren zur Darstellung der Bildinformationen in dem Überlappungsbereich denkbar. Es sei darauf hingewiesen, dass auch eine positionsbedingte Änderung der Gewichtungsfaktoren eine zeitliche Änderung darstellt, da die Bildinformationen für die einzelnen Bildpunkte zeitlich aufeinanderfolgend in den Videosignalen vorliegen. Diese Änderungen finden allerdings in einem zeitlich fest vorgegebenen Rahmen statt. "Positionsabhängige Änderung der Gewichtungsfaktoren" bedeutet im folgenden stets eine zeitliche Änderung innerhalb eines durch den Bildaufbau fest vorgegebenen Zeitrasters, während "zeitliche Änderung der Gewichtungsfaktoren" eine Änderung über mehrere Einzelbilder der darzustellenden Bildsequenz bedeutet.

Gegenstand der vorliegenden Erfindung ist des weiteren eine Vorrichtung zur Bereitstellung eines Ausgangssignals, das zur Darstellung wenigstens eines ersten Bildes eines ersten Videosignals und eines zweiten Bildes eines zweiten Videosignals in einem Gesamtbild dient, wobei sich die beiden Bilder wenigstens teilweise überlappen. Die Vorrichtung besitzt einen ersten Eingang zur Zuführung eines ersten Videosignals zur Darstellung eines ersten Bildes in einem ersten aktiven Bereich des Gesamtbildes und einen zweiten Eingang zur Zuführung eines zweiten Videosignals zur Darstellung eines zweiten Bildes in einem zweiten aktiven Bereich des Gesamtbildes.

Die Vorrichtung weist eine Verknüpfungsschaltung mit wenigstens einen Addierer zur Addition des ersten und zweiten Videosignals zur Bildung eines dritten Videosignals und eine Multiplexiereinrichtung, der das erste, zweite und dritte Videosignal zugeführt sind und die ein Ausgangssignal für das Gesamtbild zur Verfügung stellt, auf.

Weiterhin sind der Vorrichtung ein erstes Steuersignal, das Informationen bezüglich der Position und der Abmessungen des ersten aktiven Bereiches und ein zweites Steuersignal, das Informationen bezüglich der Position und der Abmessungen des zweiten aktiven Bereiches enthält, zuführbar, wobei diese Steuersignale entweder separaten Steuereingängen der Vorrichtung oder der Vorrichtung zusammen mit den die Bildinformationen enthaltenden Videosignalen zuführbar sind. Die Zuordnung des ersten, zweiten und dritten Videosignals zu dem Ausgangssignal in der Multiplexiereinrichtung erfolgt abhängig von den Steuersignalen, wobei zur Darstellung der Bildpunkte des Überlappungsbereiches das aus dem ersten und zweiten Videosignal gebildete dritte Videosignal herangezogen wird.

Gemäß einer Ausführungsform der Erfindung ist dem Addierer ein erster Multiplizierer zur Multiplikation des ersten Videosignals mit einem ersten Gewichtungsfaktor und ein zweiter Multiplizierer zur Multiplikation des zweiten Videosignals mit einem zweiten Gewichtungsfaktor vorgeschaltet.

Die vorliegenden Erfindung wird nachfolgend in Ausführungsbeispielen anhand von Figuren näher erläutert. In den Figuren zeigt:
- Figur 1: eine schematische Darstellung eines Gesamtbildes, das ein erstes Bild in einem ersten aktiven Bereich und ein zweites Bild in einem zweiten aktiven Bereich enthält, wobei sich die Bilder teilweise überlappen,
- Figur 2: ein erstes Ausführungsbeispiel einer erfindungsgemäßen Vorrichtung zur Bereitstellung eines Ausgangssignal, das zur Darstellung des Gesamtbildes geeignet ist,
- Figur 3: zeitliche Verläufe von Steuersignalen, die Informationen bezüglich der Position und der Abmessungen der aktiven Bereiche enthalten,
- Figur 4: eine erfindungsgemäße Vorrichtung gemäß einer weiteren Ausführungsform, bei welcher das erste und zweite Videosignal vor der Bildung des dritten Videosignals gewichtet werden,
- Figur 5: eine schematische Darstellung eines Gesamtbildes bei gleichmäßiger Gewichtung des ersten und zweiten Videosignals bei der Erzeugung des dritten Video-signals,
- Figur 6 bis 8: schematische Darstellungen unterschiedlicher Gesamtbilder bei Gewichtung des ersten und zweiten Videosignals abhängig von der Position des jeweiligen Bildpunktes in dem Überlappungsbereich,
- Figur 9: eine Bildsequenz zur Veranschaulichung von sich über der Zeit ändernden Gewichtungsfaktoren zur Erzielung eines zeitlichen Überblendeffekts,
- Figur 10: eine schematische Darstellung eines weiteren Gesamtbildes, bei welchem die Bilder in den aktiven Bereichen jeweils von einem Rahmen umgeben sind,
- Figur 11: eine erfindungsgemäße Vorrichtung gemäß einer weiteren Ausführungsform zur Erzeugung eines Gesamtbildes gemäß Figur 10.

In den Figuren bezeichnen, sofern nicht anders angegeben, gleiche Bezugszeichen gleiche Teile mit gleicher Bedeutung.

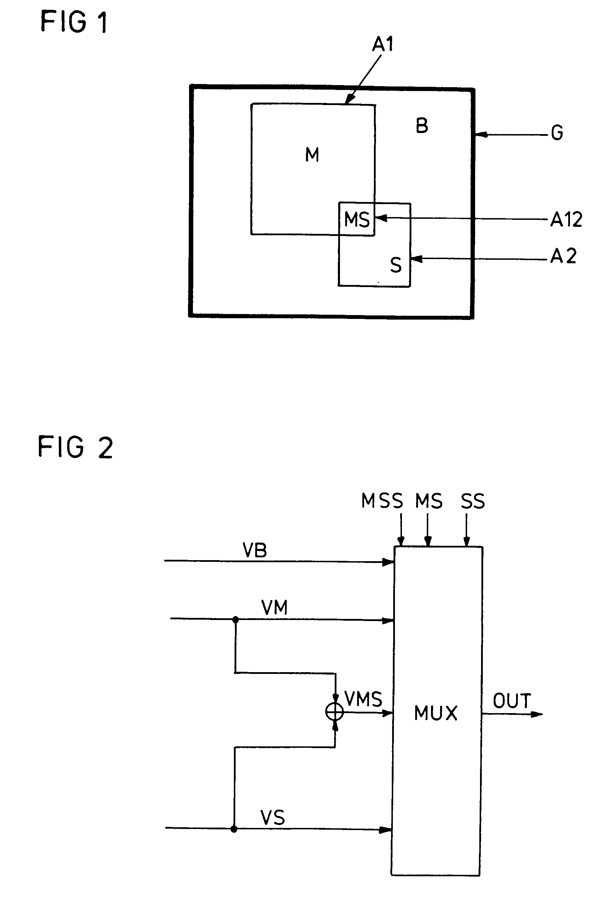

Figur 1 veranschaulicht schematisch ein Gesamtbild, das in einem darstellbaren Bildschirmbereich G ein erstes Bild M in einem ersten aktiven Bereich A1 und ein zweites Bild S in einem zweiten aktiven Bereich A2 aufweist, wobei der erste und zweite aktive Bereich A1, A2 einen Überlappungsbereich A12 aufweisen, in dem sich die das erste und zweite Bild M, S überlappen. Im Bereich außerhalb des ersten und zweiten aktiven Bereiches A1, A2 ist ein Hintergrundbild B dargestellt.

Figur 2 zeigt schematisch ein erstes Ausführungsbeispiel einer erfindungsgemäßen Vorrichtung 110 zur Erzeugung eines Bildsignals OUT, das die Bildinformationen eines Gesamtbildes der in Figur 1 gezeigten Art mit wenigstens zwei sich überlagernden Gesamtbildern M, S enthält und das in einer herkömmlichen Videoanzeigevorrichtung zur Darstellung des Gesamtbildes verwendet werden kann.

Der Vorrichtung 110 ist ein erstes Videosignal VM, das die Bildinformationen des ersten in dem ersten aktiven Bereich A1 dargestellten Bildes M enthält, und ein zweites Videosignal VS, das die Bildinformationen des zweiten in dem zweiten aktiven Bereich A2 dargestellten Bildes S enthält, zugeführt.

Das aus dem Ausgangssignal OUT dargestellte Bild ist zeilenweise aufgebaut, das heißt die Bildinformationen der in einer Zeile nebeneinanderliegenden Bildpunkte und die Bildinformationen der Bildpunkte in untereinanderliegenden Zeilen sind in dem Ausgangssignal OUT zeitlich aufeinanderfolgend enthalten. Das erste Videosignal VM und das zweite Videosignal VS enthalten die Bildinformationen zur Darstellung des ersten Bildes M in dem ersten aktiven Bereich A1 bzw. zur Darstellung des zweiten Bildes S in dem zweiten aktiven Bereich A2 in entsprechender Weise zeilenweise zeitlich aufeinanderfolgend.

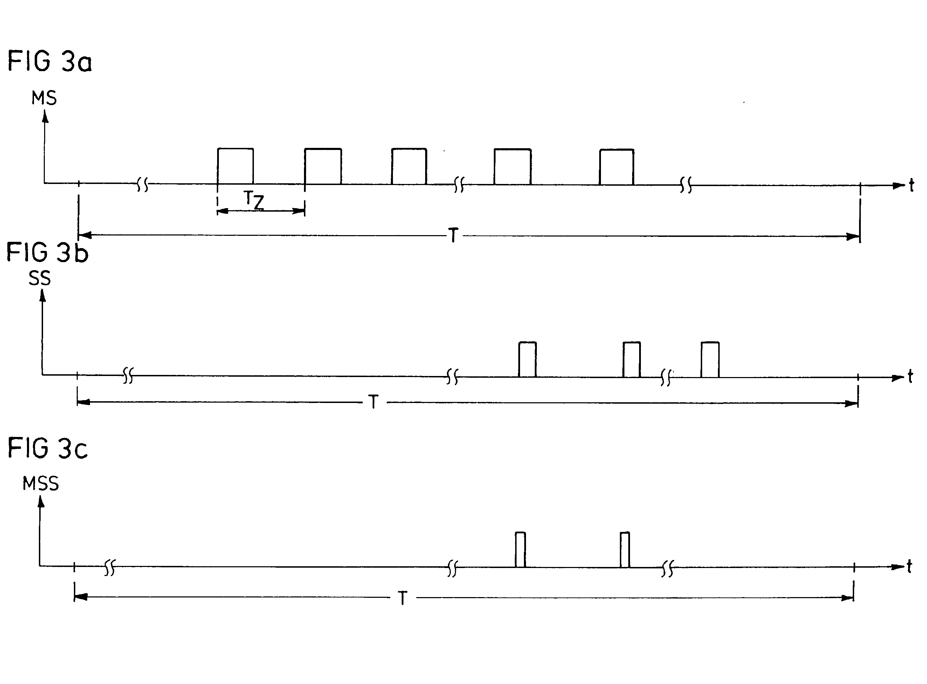

Dem ersten Videosignal VM ist ein erstes Steuersignal MS und dem zweiten Videosignal VS ist ein zweites Steuersignal SS zugeordnet, die die Position und die Abmessungen der aktiven Bereiche A1, A2 in dem Gesamtbild bestimmen. Figur 3 zeigt schematisch den zeitlichen Verlauf eines Beispiels für derartige Steuersignale MS, SS, die mit der Frequenz des dargestellten Gesamtbildes, die üblicherweise 50Hz beträgt, periodisch sind.

Die Zeitdauer T in Figur 3 bezeichnet die Zeitdauer, innerhalb derer die Bildinformationen für den zeilenweisen Aufbau eines Gesamtbildes übertragen werden. Tz bezeichnet die Zeitdauer, innerhalb derer die Bildinformationen einer Zeile übertragen werden. Die aktiven Bereiche A1, A2, in denen die Bildinformationen des ersten bzw. zweiten Videosignals VM, VS dargestellt werden, stellen jeweils nur einen Ausschnitt des darstellbaren Bildbereiches G dar. Die Zeitdauern, zu denen die Steuersignale MS, SS in Figur 3 einen oberen Signalpegel annehmen sind die Zeitperioden zu denen innerhalb der Gesamtdauer T die Bildinformationen für die Bildpunkte der aktiven Bereiche A1, A2 übertragen werden. Der zeitliche Anteil der Abschnitte, die einen oberen Signalpegel annehmen an der Zeitdauer Tz entspricht dem Verhältnis aus der Breite des Gesamtbildes G zu der Breite des jeweils aktiven Bereiches A1 bzw. A2. Die Anzahl der Abschnitte MS, VS, zu denen die Steuersignale einen oberen Signalpegel annehmen, pro Periode entspricht der Anzahl der Zeilen, aus denen der jeweilige aktive Bereich aufgebaut ist.

Das erste und zweite Videosignal VM, VS und deren zugehöriges Steuersignal sind einer Multiplexiereinrichtung MUX zugeführt, die das Ausgangssignal OUT aus dem ersten und zweiten Videosignal VM, VS zusammensetzt. Die Steuersignale MS, SS, MSS können der Multiplexiereinrichtung MUX dabei getrennt von den die Bildinformationen enthaltenden Videosignalen VM, VS zugeführt werden, oder die Steuersignale MS, SS können der Multiplexiereinrichtung MUX zusammen mit den Videosignalen VM, VS zugeführt werden, das heißt die Steuersignale MS, SS können den Videosignalen VM, VS aufmoduliert sein, wobei eine Trennung in Videosignale VM, VS und Steuersignale MS, SS dann in der Multiplexiereinrichtung MUX vorgenommen wird. Bei dem Ausführungsbeispiel gemäß Figur 2 sind die Videosignale VM, VS und deren zugehörige Steuersignale MS, SS der Multiplexiereinrichtung MUX getrennt voneinander zugeführt.

Erfindungsgemäß wird aus dem ersten Videosignal VM und dem zweiten Videosignal VS ein drittes Videosignal VMS gebildet. Dazu ist bei dem Ausführungsbeispiel gemäß Figur 2 ein Addierer ADD vorgesehen, der das erste und zweite Videosignal VM, VS addiert. Dieses dritte Videosignal VMS enthält die Bildinformationen des Bildes MS in dem Überlappungsbereich A12. Dem dritten Videosignal VMS ist ein drittes Steuersignal MSS zugeordnet, das beispielhaft in Figur 3c dargestellt ist und das aus einer Und-Verknüpfung des ersten und zweiten Steuersignals MS, SS resultiert. Das dritte Videosignal VMS und dessen zugehöriges Steuersignal MSS sind ebenfalls der Multiplexiereinrichtung MUX zugeführt.

Der Vorrichtung 110 und der Multiplexiereinrichtung MUX gemäß Figur 2 ist außerdem ein viertes Videosignal VB zur Darstellung des Hintergrundbildes B zugeführt.

Das Ausgangssignal OUT enthält die Bildinformationen der in dem zeilenweise aufgebauten Gesamtbild nebeneinander liegenden Bildpunkte zeitlich aufeinander folgend. In der Multiplexiereinrichtung MUX wird für jeden Bildpunkt des aus dem Ausgangssignal OUT aufgebauten Gesamtbildes anhand der Steuersignale MS, SS, MSS eine Entscheidung getroffen, ob der Bildpunkt innerhalb des ersten aktiven Bereiches A1, innerhalb des zweiten aktiven Bereiches A2, innerhalb des Überlappungsbereiches A12 aus dem ersten und zweiten aktiven Bereich A1, A2 oder außerhalb dieser Bereiche liegt. Liegt der darzustellende Bildpunkt innerhalb des ersten aktiven Bereiches A1 aber nicht in dem Überlappungsbereich A12, so wird die zugehörige Bildinformation des ersten Videosignals VM für das Ausgangssignal OUT übernommen, liegt der darzustellende Bildpunkt innerhalb des zweiten aktiven Bereiches A2 aber nicht in dem Überlappungsbereich A12, so wird die zugehörige Bildinformation des zweiten Videosignals VS für das Ausgangssignal OUT übernommen, und liegt der darzustellende Bildpunkt in dem Überlappungsbereich A12, so wird die zugehörige Bildinformation des dritten Videosignals VMS für das Ausgangssignal OUT übernommen. Für Bildpunkte außerhalb des ersten und zweiten aktiven Bereiches A1, A2 wird die Bildinformation des vierten Bildsignals VB für das Ausgangssignal OUT übernommen. Im Gegensatz zu bekannten Verfahren ist dem Überlappungsbereich bei dem erfindungsgemäßen Verfahren ein eigenes Videosignal VMS zugeordnet, das die in dem Überlappungsbereich A12 darzustellenden Bildinformationen enthält. Bei Verwendung der Vorrichtung gemäß Figur 2 resultieren die Bildinformationen der Bildpunkte des Überlappungsbereiches A12 aus einer Überlagerung der Bildinformationen des ersten Videosignals VM und des zweiten Videosignals VS. Das dritte Videosignal besitzt dabei oberste Priorität, das heißt, zur Darstellung der Bildpunkte in dem Überlappungsbereich A12 werden stets Bildinformationen des dritten Videosignals VMS verwendet.

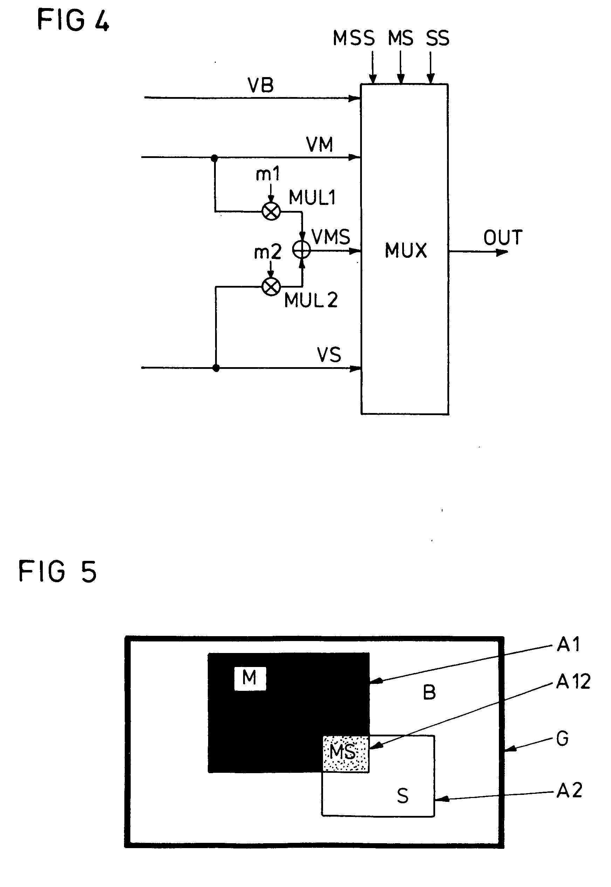

Figur 4 zeigt ein weiteres Ausführungsbeispiel einer erfindungsgemäßen Vorrichtung 120 zur Bildung eines Ausgangssignals OUT aus dem ersten und zweite Videosignal VM, VS. Dem Addierer ADD sind bei dieser Ausführungsform ein erster Multiplizierer MUL1, der das erste Videosignal VM mit einem ersten Gewichtungsfaktor m1 multipliziert, und ein zweiter Multiplizierer MUL2, der das zweite Videosignals VS mit einem zweiten Gewichtungsfaktor m2 multipliziert, vorgeschaltet.

Die Gewichtungsfaktoren m1, m2 können feste Werte annehmen oder können zeitlich und/oder räumlich variieren, wie im folgenden erläutert wird.

Figur 5 zeigt ein mittels einer Anordnung gemäß Figur 4 erzeugtes Gesamtbild, das zu Zwecken der Veranschaulichung eine schwarzes erstes Bild M in dem ersten aktiven Bereich A1 und ein zweites weißes Bild S in dem zweiten aktiven Bereich A2 aufweist. Die Gewichtungsfaktoren m1, m2 zur Darstellung des Bildes in Figur 5 betragen jeweils 0,5, so dass sich die Bildinformationen des ersten Bildes M und des zweiten Bildes S in dem Überlappungsbereich A12 zu einem grauen Bild MS überlagern.

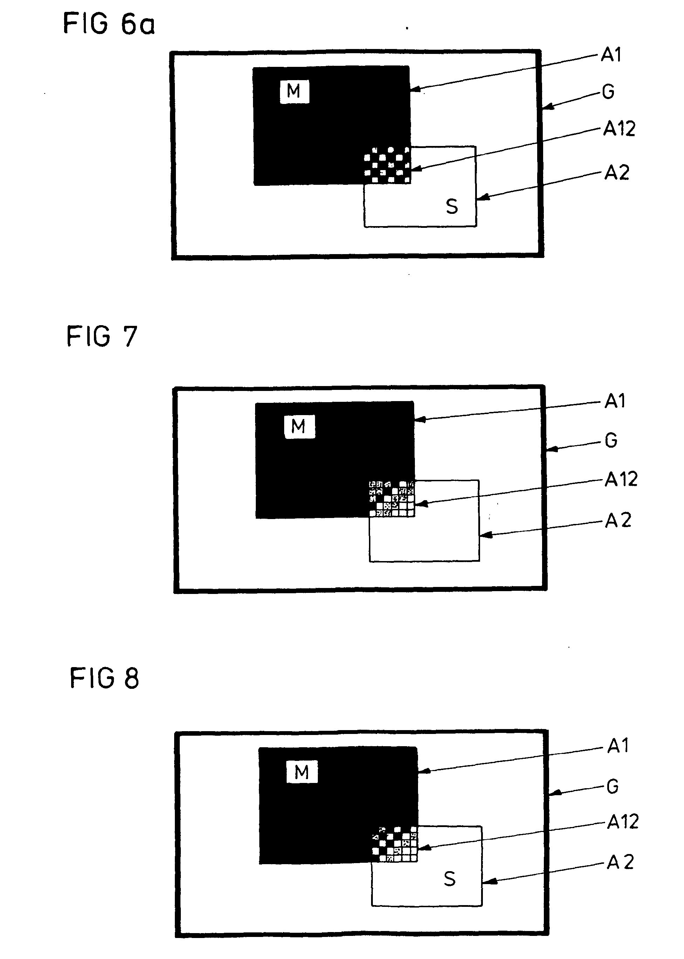

Figur 6a veranschaulicht ein weiteres Gesamtbild, bei welchem die Gewichtungsfaktoren m1, m2 einer räumlichen Änderung unterliegen, das heißt von der Position des darzustellenden Bildpunktes in dem Überlappungsbereich A12 abhängig sind. Die Gewichtungsfaktoren m1, m2 sind dabei so gewählt, dass sie für aufeinanderfolgende Bildpunkte oder eine Anzahl aufeinanderfolgende Bildpunkte des Überlappungsbereiches A12 abwechselnd den Wert Eins oder Null annehmen, so dass ein schachbrettartiges Muster in dem Überlappungsbereich A12 entsteht, wobei in den Feldern, bei denen der erste Gewichtungsfaktor m1 Eins ist, die Bildinformationen des ersten Videosignals VM dargestellt werden, und in Feldern, bei denen der zweite Gewichtungsfaktor m2 Eins ist, die Bildinformationen des zweiten Videosignals VS dargestellt werden.

Figur 6b zeigt den zeitlichen Verlauf des ersten und zweiten Gewichtungsfaktors m1, m2 für das in Figur 6a dargestellte Bild. Das Signal MSS bezeichnet das Steuersignal für das dritte Videosignal, wobei die zeitlichen Bereiche, in denen das Steuersignal MSS einen oberen Pegel annimmt, die zeitlichen Bereiche markiert, bei denen die Bildinformationen jeweils einer Zeile des Überlappungsbereiches übertragen werden. Wie den zeitlichen Verläufen der Gewichtungsfaktoren m1, m2 zu entnehmen ist, wechseln sich die zeitlichen Abschnitte, in denen der erste und zweite Gewichtungsfaktor m1, m2 jeweils den Wert Eins oder Null annehmen, ab.

Figur 7 zeigt ein weiteres Gesamtbild, bei dem das erste und zweite Videosignal VM, VS zur Bildung des dritten Videosignals VMS addiert und vor der Addition gewichtet wurden. Der Wert der Gewichtungsfaktoren m1, m2 ist bei diesem Ausführungsbeispiel ebenfalls von der Position des darzustellenden Bildpunktes in dem Überlappungsbereich A12 abhängig. Dabei gilt, dass der erste Gewichtungsfaktor m1 gegenüber dem zweiten Gewichtungsfaktor m2 um so größer ist, je weiter der Bildpunkt in der oberen linken Ecke des Überlappungsbereiches A12 liegt, und dass der zweite Gewichtungsfaktor m2 gegenüber dem ersten Gewichtungsfaktor m1 um so größer ist, je weiter der darzustellende Bildpunkt in der rechten unteren Ecke des Überlappungsbereiches A12 liegt.

Figur 8 zeigt ein weiteres Ausführungsbeispiel, bei dem der Überlappungsbereich A12 wie bei dem Ausführungsbeispiel gemäß Figur 6 in Raster unterteilt ist, wobei die Gewichtungsfaktoren m1, m2 abhängig von der Lage der Rasterbereiche in dem Überlappungsbereich A12 variieren.

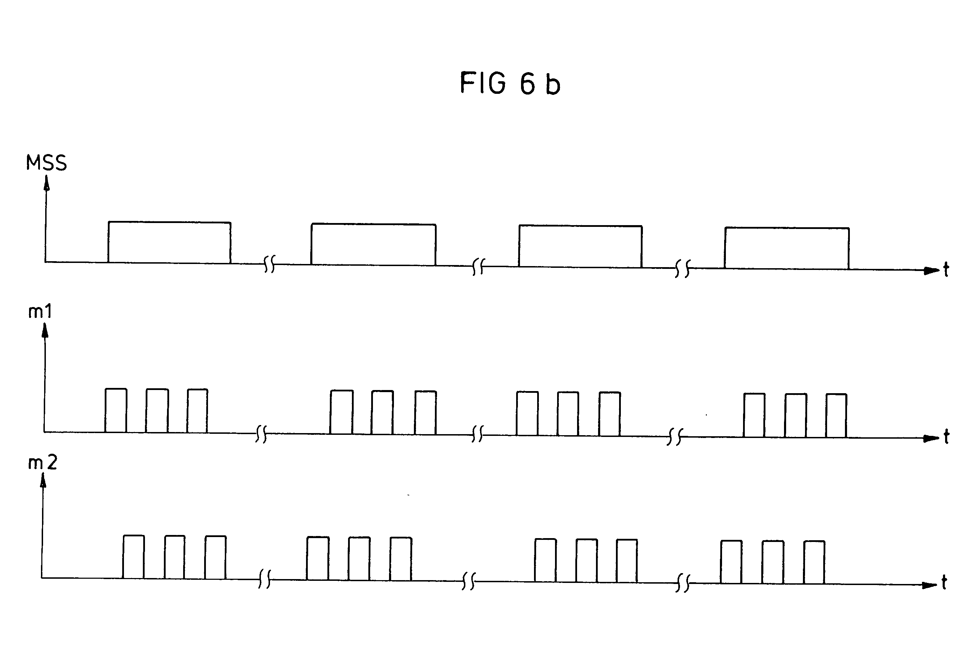

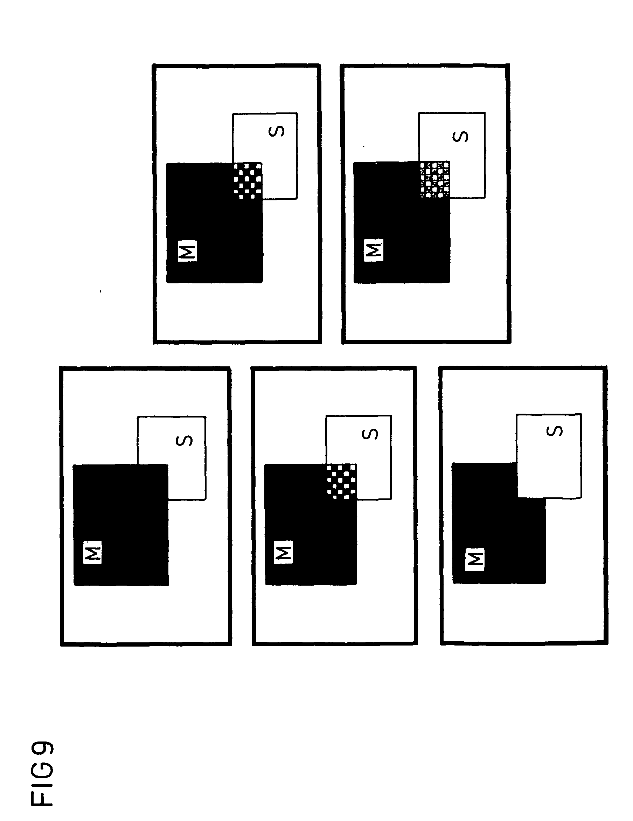

Neben einer Änderung der Gewichtungsfaktoren abhängig von der Position des darzustellenden Bildpunktes in dem Überlappungsbereich A12 ist bei einer weiteren Ausführungsform vorgesehen, die Gewichtungsfaktoren über der Zeit - und zwar über eine Zeitdauer, die sich über die Darstellung mehrerer aufeinanderfolgender Einzelbilder erstreckt - zu variieren, wie anhand der Bildsequenz in Figur 9 veranschaulicht ist. Dabei ist zunächst der erste Gewichtungsfaktor m1 Eins, wodurch die Bildinformationen des ersten Bildes M in dem Überlappungsbereich A12 dargestellt sind und das erste Bild M im Vordergrund steht. Ausgehend von dem im Vordergrund stehenden ersten Bild M bei dem ersten, oben dargestellten Gesamtbild findet eine Überblendung zu dem im Vordergrund stehenden zweiten Bild S bei dem letzten, unten dargestellten Gesamtbild statt. Die Überblendung erfolgt bei dem Beispiel in einem rasterförmigen Muster, wobei zunächst bei jedem zweiten Feld des Rasters der zweite Gewichtungsfaktor m2 zunimmt und der erste Gewichtungsfaktor m1 abnimmt, bis in diesen Feldern die Bildinformation des zweiten Bildes S wiedergegeben wird. Anschließend wird der erste Gewichtungsfaktor m1 in den übrigen Feldern reduziert und der zweite Gewichtungsfaktor m2 wird erhöht bis auch in diesen Feldern die Bildinformation des zweiten Videosignals VS bzw. des zweiten Bildes wiedergegeben ist.

Der wesentliche Aspekt des erfindungsgemäßen Verfahrens besteht darin, dass aus dem ersten und zweiten Videosignal VM, das die Bildinformationen des in dem ersten aktiven Bereich A1, A2 dargestellten ersten Bildes M enthält, und aus dem zweiten Videosignal VS, das die Bildinformationen des in dem zweiten aktiven Bereich dargestellten zweiten Bildes S enthält, ein drittes Videosignal VMS gebildet wird, das wie ein dritter Bildkanal bei der Bildung des Ausgangssignals OUT behandelt wird. Die Bildinformationen des dritten Videosignals VMS werden dabei stets im Vordergrund dargestellt.

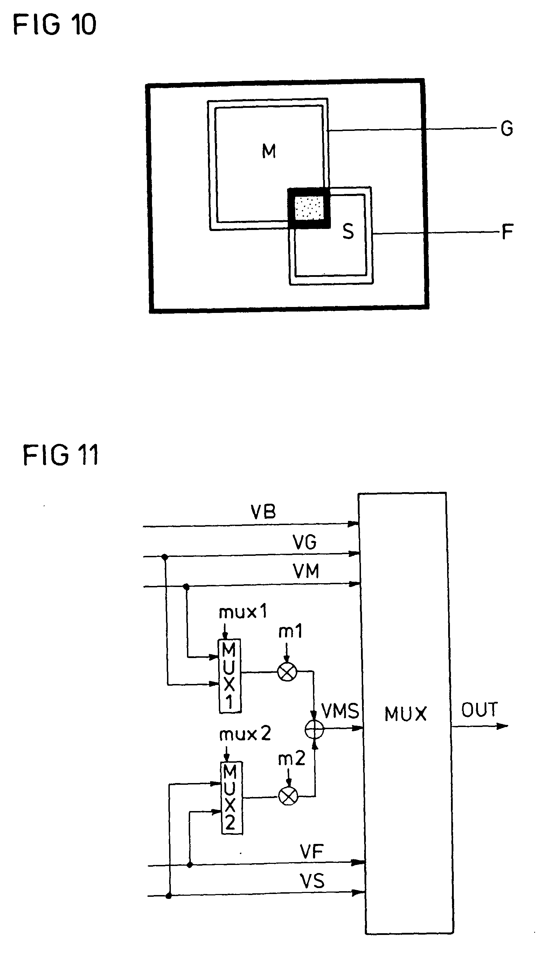

Figur 10 zeigt ein weiteres Gesamtbild, bei dem ein erster Rahmen G um das erste Bild M und ein zweiter Rahmen F um das zweite Bild S dargestellt ist, wobei sich die Bilder M, S und die die Bilder umgebenden Rahmen G, F teilweise überlappen.

Figur 11 zeigt ein Ausführungsbeispiel einer erfindungsgemäßen Vorrichtung 130, die zur Bereitstellung eines Ausgangssignals OUT zur Darstellung des Gesamtbildes geeignet ist.

Der Vorrichtung 130 sind neben dem ersten und zweiten Videosignal VM, VS und dem Videosignal VB für das Hintergrundbild B ein Videosignal VG für den ersten Rahmen G und ein Videosignal VF für den zweiten Rahmen F zugeführt. Zur Bildung des dritten Videosignals VMS sind das erste Videosignal VM und das Videosignal für den ersten Rahmen VG einem ersten Multiplexer MUX1 zugeführt, dessen Ausgang der erste Multiplizierer MUL1 nachgeschaltet ist. Weiterhin sind das zweite Videosignal VS und das Videosignal VF für den zweiten Rahmen F einem zweiten Multiplexer MUX2 zugeführt, dessen Ausgang der zweite Multiplizierer MUL2 nachgeschaltet ist. Der erste Multiplexer MUX1 gibt abhängig von einem Steuersignal mux1 die Bildinformation des ersten Videosignals VM oder des Videosignals VG für den ersten Rahmen G an seinen Ausgang weiter, wobei das Steuersignal mux1 die Information enthält, ob der darzustellende Bildpunkt zu dem ersten aktiven Bereich A1 oder zu dem Bereich des ersten Rahmens G gehört. Entsprechend gibt der zweite Multiplexer MUX2 abhängig von einem Steuersignal mux2 die Bildinformation des zweiten Videosignals VS oder des Videosignals VF für den ersten Rahmen F an seinen Ausgang weiter, wobei das Steuersignal mux2 die Information enthält, ob der darzustellende Bildpunkt zu dem zweiten aktiven Bereich A1 oder zu dem Bereich des zweiten Rahmens F gehört.

## Patentansprüche

1. Verfahren zur Darstellung eines ersten Bildes (M) und eines zweiten Bildes (S), die sich wenigstens teilweise überlappen, in einem Gesamtbild (G), wobei das Verfahren folgende Merkmale aufweist:
- Bereitstellen eines ersten Videosignals (VM) zur Darstellung des ersten Bildes (M) in einem ersten aktiven Bereich (A1) des Gesamtbildes (G), wobei das erste Videosignal (VM) Bildinformationen für nebeneinander liegende Bildpunkte des ersten Bildes (M) zeitlich aufeinanderfolgend enthält,
- Bereitstellen eines zweiten Videosignals (VS) zur Darstellung des zweiten Bildes (S) in einem zweiten aktiven Bereich (A2) des Gesamtbildes (G), wobei das zweite Videosignal (VS) Bildinformationen für nebeneinander liegende Bildpunkte des zweiten Bildes (S) zeitlich aufeinanderfolgend enthält,
- Erzeugen eines dritten Videosignals (VMS) aus dem ersten und zweiten Videosignal (VM, VS) zur Darstellung eines dritten Bildes (MS) in einem Überlappungsbereich (A12) des ersten und zweiten aktiven Bereiches (A1, A2),
- Erzeugen eines Ausgangssignals (OUT) zur Darstellung des Gesamtbildes (G), das die Bildinformationen nebeneinanderliegender Bildpunkte des Gesamtbildes (G) zeitlich aufeinanderfolgend enthält, wobei dem Ausgangssignal (OUT) die Bildinformation des ersten Videosignals (VM) zugeordnet wird, wenn ein zugehöriger Bildpunkt des Gesamtbildes (G) innerhalb des ersten aktiven Bereiches (A1) liegt, wobei dem Ausgangssignal (OUT) die Bildinformation des zweiten Videosignals (VS) zugeordnet wird, wenn ein zugehöriger Bildpunkt des Gesamtbildes (G) innerhalb des zweiten aktiven Bereiches (A2) liegt, und wobei dem Ausgangssignal (OUT) die Bildinformation des dritten Videosignals (VMS) zugeordnet wird, wenn ein zugehöriger Bildpunkt des Gesamtbildes (G) innerhalb des Überlappungsbereiches (A12) liegt.

2. Verfahren nach Anspruch 1, bei dem das erste Videosignal (VM) und das zweite Videosignal (VS) zur Erzeugung des dritten Videosignals (VMS) addiert werden.

3. Verfahren nach Anspruch 2, bei dem das erste Videosignal (VM) vor der Addition mit einem ersten Gewichtungsfaktor (m1) multipliziert wird und bei dem das zweite Videosignal (VS) vor der Addition mit einem zweiten Gewichtungsfaktor (m2) multipliziert wird.

4. Verfahren nach Anspruch 3, bei dem Werte der Gewichtungsfaktoren (m1, m2) abhängig von der Position des zugehörigen Bildpunktes in dem Überlappungsbereich (A12) sind.

5. Verfahren nach Anspruch 3 oder 4, bei welchem die Gewichtungsfaktoren (m1, m2) über eine Zeitdauer, die größer ist als die Zeitdauer, innerhalb der die Bildinformationen für ein Gesamtbild (G) übertragen werden, variieren.

6. Verfahren nach Anspruch 5, bei dem der eine der Gewichtungsfaktoren über der Zeit von Eins nach Null und der andere der Gewichtungsfaktoren von Null nach Eins wechselt.

7. Verfahren nach Anspruch 3, bei dem die Gewichtungsfaktoren gleich groß sind.

8. Vorrichtung zur Darstellung eines ersten Bildes (M) und eines zweiten Bildes (S), die sich wenigstens teilweise überlappen, in einem Gesamtbild (G), die folgende Merkmale aufweist:
- einen ersten Eingang zur Zuführung eines ersten Videosignals (VM) zur Darstellung des ersten Bildes (M) in einem ersten aktiven Bereich (A1) des Gesamtbildes (G), wobei das erste Videosignal (VM) Bildinformationen für nebeneinander liegende Bildpunkte des ersten Bildes (M) zeitlich aufeinanderfolgend enthält,
- einen zweiten Eingang zur Zuführung eines zweiten Videosignals (VS) zur Darstellung des zweiten Bildes (S) in einem zweiten aktiven Bereiche (A2) des Gesamtbildes, wobei das zweite Videosignal (VS) Bildinformationen für nebeneinander liegende Bildpunkte des zweiten Bildes (S) zeitlich aufeinanderfolgend enthält,
- eine Verknüpfungsschaltung (MUL1, MUL2, ADD) der das erste und zweite Videosignal (VM, VS) zugeführt sind, zur Erzeugung eines dritten Videosignals (VMS) aus dem ersten und zweiten Videosignal (VM, VS) zur Darstellung eines dritten Bildes (MS) in einem Überlappungsbereich (A12) des ersten und zweiten aktiven Bereiches (A1, A2),
- eine Multiplexiereinrichtung (MUX), der das erste, zweite und dritte Videosignal (VM, VS, VMS) zugeführt sind und die ein Ausgangssignal (OUT) zur Darstellung des Gesamtbildes (G) bereitstellt, wobei die Multiplexiereinrichtung (MUX) die Bildinformation des ersten Videosignals (VM) dem Ausgangssignal (OUT) zuordnet, wenn der zugehörige Bildpunkt des Gesamtbildes (G) innerhalb des ersten aktiven Bereiches (A1) liegt, wobei die Multiplexiereinrichtung (MUX) die Bildinformation des zweiten Videosignals (VS) dem Ausgangssignal (OUT) zuordnet, wenn der zugehörige Bildpunkt des Gesamtbildes (G) innerhalb des zweiten aktiven Bereiches (A2) liegt, und wobei die Multiplexiereinrichtung (MUX) die Bildinformation des dritten Videosignals (VMS) dem Ausgangssignal (OUT) zuordnet, wenn der zugehörige Bildpunkt des Gesamtbildes (G) innerhalb eines Überlappungsbereiches (A12) aus dem ersten und zweiten aktiven Bereich (A1, A2) liegt.

9. Vorrichtung nach Anspruch 8, bei der der Multiplexiereinrichtung Steuersignals (MS, SS, MSS) zugeführt sind, die Informationen über die Position des ersten und zweiten aktiven Bereiches (A1, A2) und des Überlappungsbereiches enthalten und die in der Multiplexiereinrichtung (MUX) zur Zuordnung der Bildinformationen des ersten, zweiten und dritten Videosignals (VM, VS, VMS) auf das Ausgangssignal (OUT) verwendet werden.

10. Vorrichtung nach Anspruch 9 oder 10, bei der die Verknüpfungsschaltung (ADD, MUL1, MUL2) einen Addierer (ADD) aufweist der das erste und zweite Videosignal (VM, VS) zur Bildung des dritten Videosignals (VMS) addiert.

11. Vorrichtung nach Anspruch 10, bei der die Verknüpfungsschaltung (ADD, MUL1, MUL2) einen ersten Multiplizierer aufweist, der dem Addierer (ADD) vorgeschaltet ist und der das erste Videosignal (VM) mit einem ersten Gewichtungsfaktor (m1) multipliziert und bei der die Verknüpfungsschaltung (ADD, MUL1, MUL2) einen zweiten Multiplizierer (MUL2) aufweist, der dem Addierer (ADD) vorgeschaltet ist und der das zweite Videosignal (VS) mit einem zweiten Gewichtungsfaktor (m2) multipliziert.
